Europäisches Patentamt

European Patent Office

Office européen des brevets

(19)

(11) Publication number: **0 284 445 B1**

# EUROPEAN PATENT SPECIFICATION

(12)

(45) Date of publication of patent specification: **20.05.92**  (51) Int. Cl.⁵: **G11B 17/22**, G11B 17/26

(21) Application number: **88302754.2**

(22) Date of filing: **28.03.88**

Divisional application 91105193.6 filed on 28/03/88.

(54) **Disk storage and retrieval device.**

(30) Priority: 27.03.87 JP 46345/87 U
11.05.87 JP 68920/87 U
29.06.87 JP 159833/87
08.09.87 JP 137061/87 U
24.09.87 JP 147139/87 U

(43) Date of publication of application:
**28.09.88 Bulletin 88/39**

(45) Publication of the grant of the patent:
**20.05.92 Bulletin 92/21**

(84) Designated Contracting States:
**DE FR GB**

(56) References cited:
**EP-A- 0 138 005
EP-A- 0 163 463
EP-A- 0 173 136**

**PATENT ABSTRACTS OF JAPAN, unexamined applications, P field, vol. 9, no. 246, October 3, 1985 THE PATENT OFFICE JAPANESE GOVERNMENT, page 117 P 393**

(73) Proprietor: **MITSUBISHI DENKI KABUSHIKI KAISHA**
2-3, Marunouchi 2-chome Chiyoda-ku
Tokyo 100(JP)

(72) Inventor: **Motoyoshi, Takeo c/o Itami Seisakusho
Mitsubishi Denki K.K. 1-1, Tsukaguchi Honmachi
8-chome Amagasaki City Hyogo Prefecture(JP)**
Inventor: **Yamashita, Tohru c/o Itami Seisakusho
Mitsubishi Denki K.K. 1-1, Tsukaguchi Honmachi
8-chome Amagasaki City Hyogo Prefecture(JP)**
Inventor: **Okamoto, Yoshiharu c/o Itami Seisakusho
Mitsubishi Denki K.K. 1-1, Tsukaguchi Honmachi
8-chome Amagasaki City Hyogo Prefecture(JP)**
Inventor: **Kitaoka, Yuzo c/o Itami Seisakusho
Mitsubishi Denki K.K. 1-1, Tsukaguchi Honmachi
8-chome Amagasaki City Hyogo Prefecture(JP)**

EP 0 284 445 B1

Inventor: **Matsumoto, Tatsuhiko c/o Itami Seisakusho**
**Mitsubishi Denki K.K. 1-1, Tsukaguchi Hon-machi**
**8-chome Amagasaki City Hyogo Prefecture(JP)**

(74) Representative: **Lawson, David Glynne et al**
**MARKS & CLERK 57-60 Lincoln's Inn Fields**
**London WC2A 3LS(GB)**

## Description

The present invention relates to a disk storage and retrieval device in which a multitude of disk cartridges each receiving therein an information storage disk are stored in a stocker or stockers and retrieved therefrom by a transport means so as to be inserted into a recording and reproducing device.

Description of the Prior Art

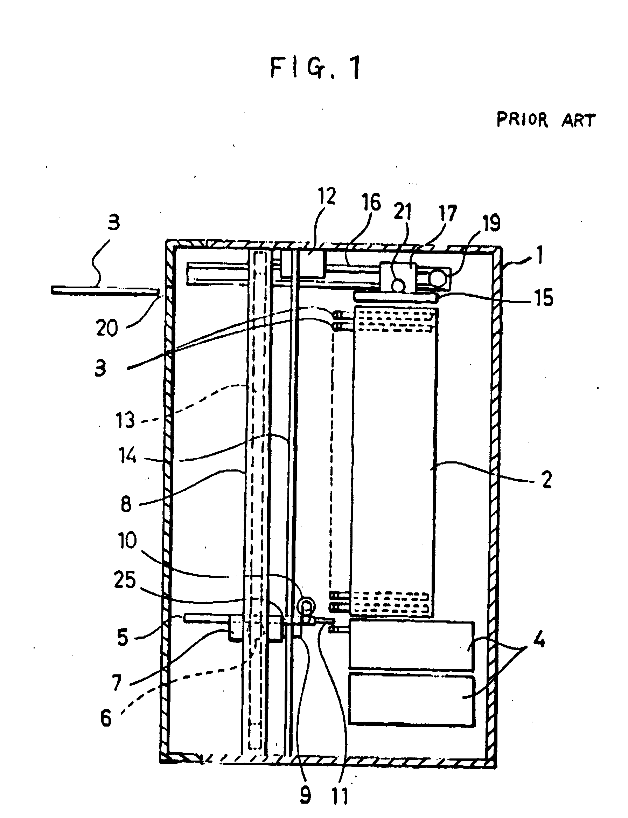

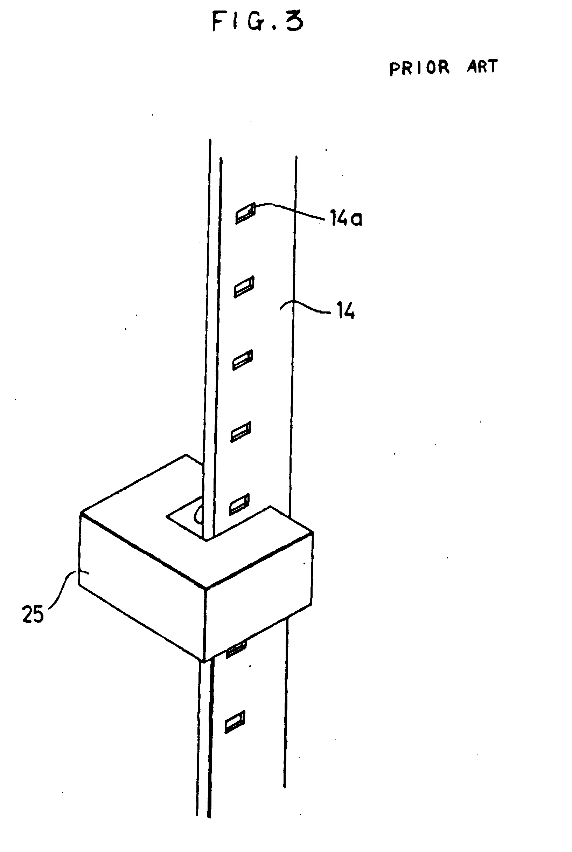

There is known a conventional disk storage and retrieval device as illustrated in Figs. 1 through 3 which is disclosed, for example, in Japanese Utility Model Laid-Open No. 61-136367. In Fig. 1, the conventional disk storage and retrieval device illustrated has a box-shaped housing 1 in which a stocker 2 is installed for storing a multitude of disk cartridges 3 each of which has a rectangular-shaped cartridge case and an information storage disk such as an optical disk, a video disk or the like. A recording and reproducing device 4 is disposed in the housing 1 below the stocker 2 for recording information on a disk and reproducing the recorded information therefrom. A carrier 5 is mounted through a support arm 6 and a slider 7 on a vertical guide rail 8 for movement therealong, the carrier 5 being rotatably supported on the support arm 6 at its one end. A motor 9 is mounted on the support arm 6 for rotating the carrier 5 around a horizontal axis at one end of the support arm 6. The carrier 5 has a finger 11 which is driven by a motor 10 to move toward and away from the stocker 2 so as to grip an appropriate cartridge 3 and pull it out of the stocker 2 or insert it therein. The slider 7 is connected to an endless belt 13 which is entrained around an upper and a lower pulley 13a and 13b so that when the upper pulley 13a coupled with a motor 12 is driven to rotate by the motor, the endless belt 13 is caused to run or rotate, thereby moving the slider 7 and hence the carrier 5 vertically. A scale 14 is vertically installed in the housing 1 for indicating stop positions of the carrier 5. A slide table 15 is slidably supported through a slider 17 and a support arm 18 on a horizontal guide rail 16 which is mounted through unillustrated mounting means on the top panel of the housing 1. The slider 17 is operatively connected through an unillustrated transmission mechanism with a motor 19 mounted on the horizontal guide rail 16 so that it is driven by the motor 19 to move along the horizontal guide rail 16. A rectangular-shaped opening 20 is provided in the front panel of the housing 1 near the top panel thereof for permitting transport of a disk cartridge 3 between the interior and the exterior of the housing 1. A cartridge transport mechanism 22 is incorporated in the slide table 15 and is driven by a motor 21 mounted on the slide table 15 for transporting a disk cartridge 3 into or out of the housing 1 through the opening 20. A position sensor 25 is provided on the carrier 5 for sensing the position of the carrier 5 by means of the scale 14 and generating a signal representative of the carrier position thus sensed. An example of such a position sensor 25 is illustrated in Fig. 3. In this case, the scale 14 has a plurality of through holes 14a formed at predetermined vertical intervals, and the scale sensor 25 may be a photosensor which comprises an emitter and a receiver which are disposed in a spaced opposite relation with each other with the scale 14 interposed therebetween so that light emitted from the emitter passes through one of the through holes 14a in the scale 14 and is received by the receiver.

In operation, a disk cartridge 3 is stored in the large-volume disk storage and retrieval device in the following manner. First, the slide table 15 is driven by the motor 19 through an unillustrated transmission mechanism to move along the horizontal guide rail 16 to a position near the front panel of the housing 1. A disk cartridge 3 is then inserted manually into the opening 20 in the front panel. When the cartridge 3 is inserted into the opening 20, it is drawn into the slide table 15 by means of the cartridge transport mechanism 22. The slide table 15 is then moved toward the stocker 2 by means of the motor 19 through the unillustrated transmission mechanism.

Subsequently, the carrier 5 is driven by the motor 12 to move upwards from an illustrated lower position in Fig. 1 to a position in which it is flush with the slide table 15 under the combined action of the scale 14 and the position sensor 25. In this state, the finger 11 is operated by the motor 10 to draw the cartridge 3 into the carrier 5.

After the cartridge 3 has been fully drawn into the carrier 5, the carrier 5 is vertically moved by the motor 12 to an appropriate level corresponding to a desired shelf in the stocker 2 or to an insertion opening 4a of the recording and reproducing device 4 as required, and precisely stopped at that position under the action of the scale 14 and the position sensor 25. With the carrier 5 being precisely stopped in this manner, the finger 11 is moved by the motor 10 toward the stocker 2 or the recording and reproducing device 4 so that the cartridge 3, being held by the finger 11, is inserted into the stocker 2 or the recording and reproducing device 4.

On the other hand, in order to remove a cartridge 3 from the stocker 2 or the recording and reproducing device 4 toward the exterior of the housing 1, the above-described operations are carried out in a reverse manner. Further, a cartridge 3 can be transported from the recording and reproducing device 4 to the stocker 2 or vice versa substantially in the same manner as described above.

With the above-mentioned conventional disk storage and retrieval device as constructed above, the distance between adjacent shelves of the stocker 2, the vertical distance between the widthwise centre of the uppermost shelf and the widthwise centre of the opening 20 in the housing 1, and the vertical distance between the widthwise center of the lowermost shelf and the opening 4a in the recording and reproducing device 4 are all different from one another and have no mutual relation at all. Therefore, provision of the scale 14 and the position sensor 25 is required for precisely defining the respective stop positions of the carrier 5 relative to the stocker 2 and the recording and reproducing device 4. In this case, it is necessary to reduce the vertical speed of the carrier 5 as it approaches a desired stop position. This not only requires a complicated control mechanism but also increases access time as required for retrieving a desired disk cartridge from the stocker.

The above described conventional disk storage and retrieval device only has one stocker for storing disks and has therefore a rather limited storage capacity. It is only to some extend possible to increase the storage capacity by using a higher stocker.

Another disk storage and retrieval device known from EP-A-0.138.005 increases the disc storage capacity by using two fixed stockers, each for storing a plurality of disks. The disks are (as in the above described device) vertically disposed with one disk stored horizontal in each level.

EP-A-0.163.463 discloses a jukebox having two fixed stockers "lying down", each for storing a plurality of disks also in cartridges.

Since all of the above described disk storage devices uses maximal two stockers each holding only one disk per level, they all suffer from having a rather limited storage capacity.

In view of the above, the present invention is intended to obviate the above-described problems of the prior art.

An object of the present invention is to provide a disk storage and retrieval device of the type described which requires only a samll installation area but has a large cartridge storage capacity per unit volume, and which can reduce access time as required to retrieve a desired disk cartridge.

A subsidiary object of the presnet invention is to provide a disk storage and retrieval device of the type described in which a disk cartridge displaced or projected from its normal storage position can be returned to the normal position in a stocker by a simple operation of an operator without any difficulty.

Another subsidiary object of the present invention is to provide a disk storage and retrieval device of the type described which can prevent inadvertent displacements of cartridges once stored in a stocker due to external vibration or the like, and in which even if a cartridge is displaced for some reasons from its predetermined normal position, the movement of the carrier is immediately stopped so as to avoid any damage to the cartridge.

A further subsidiary object of the present invention is to provide a disk storage and retrieval device of the type described in which the number of component parts of a stocker and the assembling time thereof can be minimized, and in which errors in assembling the stocker can be materially reduced or avoided.

According to the present invention, there is provided a disk storage and retrieval device comprising:

a housing;

a recording and reproducing means disposed in the housing for recording and reproducing information on a disk cartridge; and

a stocker characterized in that it is rotatably disposed in the housing above the recording and reproducing means for storing a multitude of disk cartridges, the stocker having a plurality of horizontal shelf plates which are vertically disposed at equal intervals and fixedly secured to a vertically extending rotary shaft for rotation therewith, each of the shelf plates having a plurality of storage areas for receiving a plurality of disk cartridges.

The above and other objects, features and advantages of the present invention will become apparent from the following detailed description of the invention when taken in conjunction with the accompanying drawings.

Fig. 1 is a side elevational view in vertical cross section of a conventional disk storage and retrieval device;

Fig. 2 is a front elevational view in vertical cross section of the conventional disk storage and retrieval device shown in Fig. 1;

Fig. 3 is a perspective view of a scale and a position sensor as shown in Figs. 1 and 2;

Fig. 4 is a side elevation view in vertical cross section of a disk storage and retrieval device;

Fig. 5 is a front elevational view in vertical cross section of another disk storage and retrieval device;

Fig. 6 is a righthand side elevational view in vertical cross section of the disk storage and retrieval device of Fig. 5;

Fig. 7 is a lefthand side elevational view of the disk storage and retrieval device of Fig. 5;

Fig. 8 is a cross-sectional view on line VIII-VIII of Fig. 5;

Fig. 9 is a plan view of the disk storage and retrieval device of Fig. 5;

Fig. 10 is a perspective view of a disk cartridge and a portion of a stocker on an enlarged scale shown in Fig. 5;

Fig. 11 is a perspective view of a portion of a stocker provided with a modified form of a cartridge sensor;

Fig. 12 is a side elevational view of a portion of a modified form of stocker;

Fig. 13 is a front elevational view of a portion of the stocker of Fig. 12;

Fig. 14 is a side elevational view in vertical cross section of a disk storage and retrieval device in accordance with of the present invention;

Fig. 15 is a perspective view of a stocker as shown in Fig. 14; and

Fig. 16 is a partially cutaway plan view of the stocker of Fig. 15.

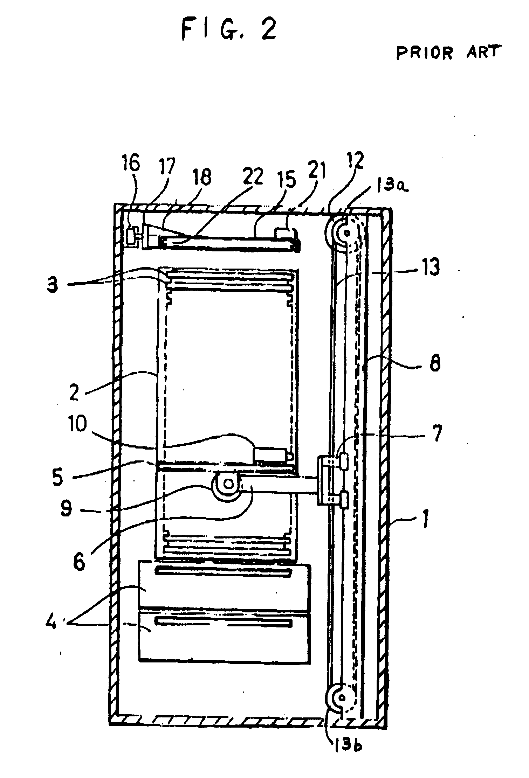

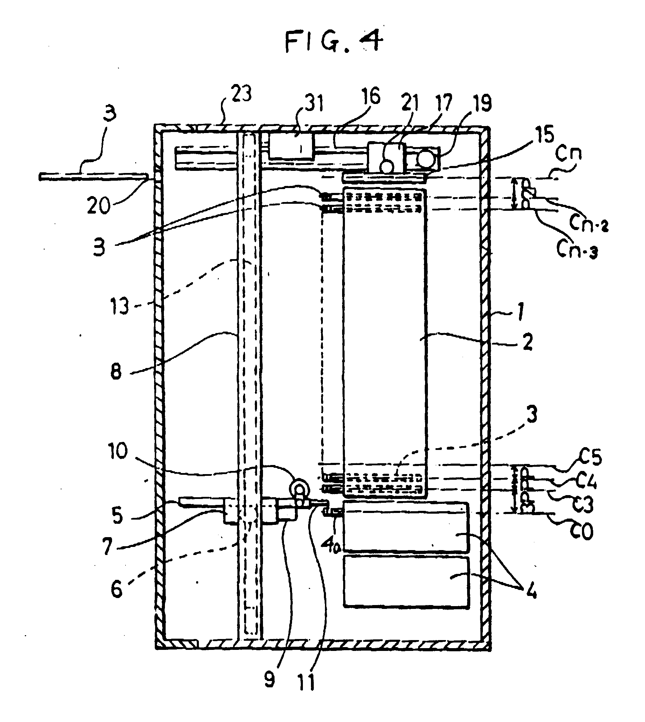

Referring to the drawings and first to Fig. 4, there is illustrated a disk storage and retrieval device in which component parts or members of this embodiment corresponding to those of Figs. 1 and 2 are identified by the same reference numerals as those employed in Figs. 1 and 2. As can be seen from Fig. 4, the general construction of this device is substantially similar to that of the previously described conventional disk storage and retrieval device illustrated in Figs. 1 and 2 except for the fact that, in the present device, the scale 14 and the position sensor 25 of the conventional device are omitted. As clearly illustrated in Fig. 4, a stocker 2 has a multitude of shelves 2a which are disposed vertically at a predetermined interval or distance P. The stocker 2, a slide table 15 and a recording and reproducing device 4 are disposed in such a manner that the vertical distance between the widthwise center C0 of a disk-insertion opening 4a in a recording and reproducing device 4 and the widthwise center C3 of the lowermost shelf of the stocker 2, and the vertical distance between the widthwise center Cn of the slide table 15 and the widthwise center Cn-2 of the uppermost shelf of the stocker 2 are equal to m times the distance P between the adjacent stocker shelves where m is an integer, and in the illustrated device, for example, such distances are 3P and 2P, respectively.

In this connection, the carrier 5 is caused to move vertically in a stepwise fashion by means of a motor 31 in the form of a stepping motor. For example, suppose that the disk-insertion opening 4a in the recording and reproducing device 4, the shelves in the stocker 2 and the slide table 15 are consecutively addressed as C0, C3, C4, C5 ... Cn-2, and Cn, respectively, and that to move the carrier 2 a distance P requires that a signal corresponding to X pulses be input to the stepping motor 31. In this case, to move the carrier 5 from address n1 to address n2 requires a signal corresponding to (n1-n2) x X pulses to be input to the stepping motor 31. If (n1-n2) x X is negative, the stepping motor 31 is driven to run in a direction to move the carrier 5 upwards, whereas if it is positive, the stepping motor 31 is driven to run in the opposite direction to move the carrier 5 downwards. In this manner, the carrier 5 can be moved by the motor 31 to a desired position which corresponds exactly to a desired shelf in the stocker 2, or the insertion opening 4a in the recording and reproducing device 4, or the slide table 15.

After the carrier 5 has been thus moved to and stopped at the desired position as instructed, the finger 11 is then extended or moved forward by the motor 10 so that the disk cartridge 3 held by the carrier 5 is thereby moved forward to be inserted into the predetermined location.

Though in the above device, the vertical distance between the widthwise center of the opening 4a in the recording and reproducing device 4 and the widthwise center of the lowermost stocker shelf, and the vertical distance between the widthwise center of the slider table 15 and the widthwise center of the uppermost stocker shelf are determined to be m times (m = an integer) the distance between the widthwise centers of adjacent stocker shelves, they may otherwise be set in relation to the number of pulses to be input to the stepping motor 31.

Thus, according to this device, due to the fact that the shelves in the cartridge stocker 2 are vertically disposed at equal intervals or vertically spaced equally from each other, the carrier 5 and hence a disk cartridge 3 held thereby can be moved to a desired position in an extremely exact manner without any difficulty, and control on positioning of the carrier 5 can be made very much simple, thereby materially shortening the access time as required for retrieving a desired disk cartridge 3.

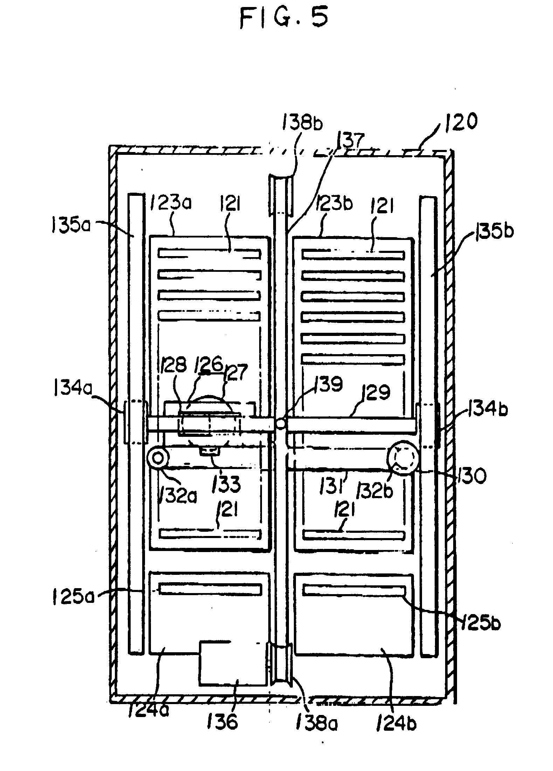

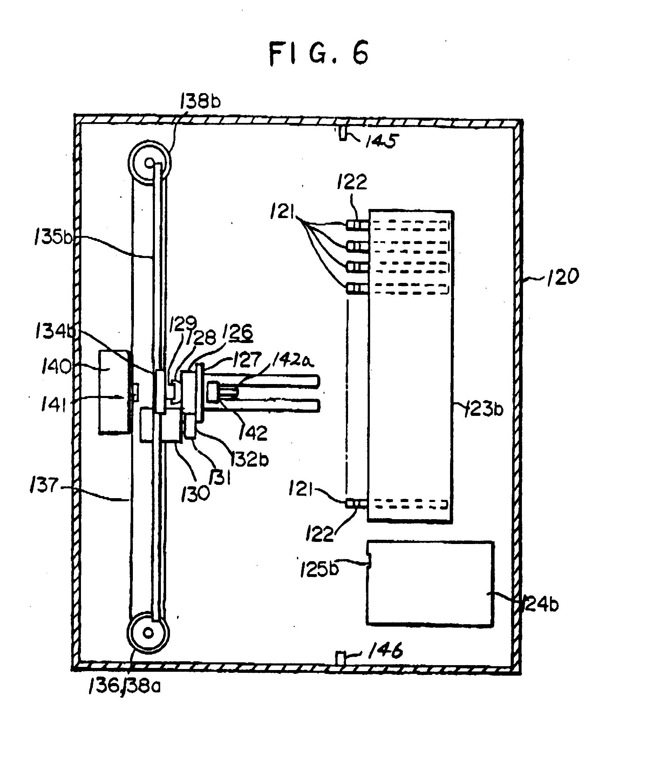

Figs. 5 through 10 show another disk storage and retrieval device. As clearly seen from Fig.s 5 and 6, this device includes a pair of upright cartridge stockers 123a, 123b which are vertically installed in a box-shaped housing 120 near a back panel 120b thereof in a side-by-side relation with each other with their front openings or surfaces being disposed on a common one and same vertical plane. Disposed below the respective stockers 123a, 123b in the housing 120 are a pair of recording and reproducing devices 124a, 124b. Each of the recording and reproducing devices 124a, 124b has a disk-insertion opening 125a or 125b through which a disk cartridge 121 is inserted into or removed from the recording and reproducing device 124a or 124b, the surface of each of the disk-insertion openings 125a, 125b being on the same vertical plane on which the front openings or surfaces of the stockers 123a, 123b lie.

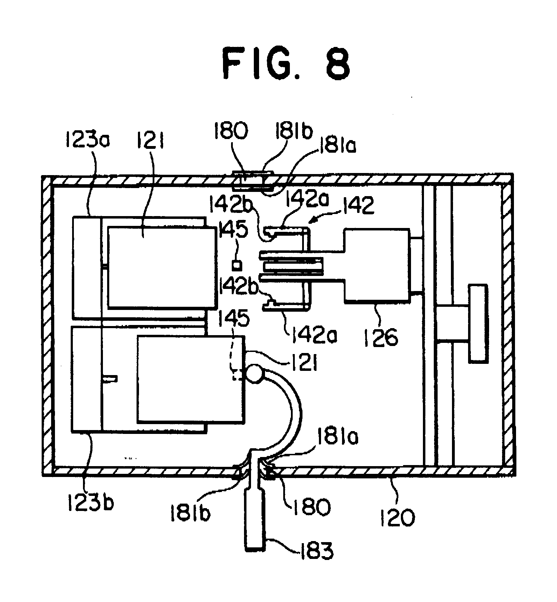

A cartridge carrier 126 for transporting a disk cartridge 121 is slidably supported through a horizontally movable slider 128 on a horizontal guide rail 129 which is in turn slidably mounted at its opposite ends through a pair of vertically movable sliders 134a, 134b on a pair of vertical guide rails 135a, 135b which are fixedly secured by unillustrated known fastening means to appropriate portions (e.g., side panels) of the housing 120. A rotation means 127 in the form of a motor is provided for rotating the carrier 126 around a horizontal axis perpendicular to the horizontal guide rail 129, i.e., turning the carrier 126 upside down. The carrier 126 is connected through a fastening member 133 with an endless belt 131 which is entrained around a pair of pulleys 132a, 132b. The pulley 132b is coupled with the output shaft of a motor 130 mounted to the horizontal guide rail 129 so that the belt 131 is driven by the motor 130 to run around the pulleys 132a, 132b thereby to move the carrier 126 along the horizontal guide rail 129. The horizontal guide rail 129 is connected through a fastening member 139 with an endless belt 137 which vertically extends between and is entrained around a pair of lower and upper pulleys 138a, 138b. The lower or drive pulley 138a is coupled with the output shaft of a motor 136, which is mounted on the housing 120 at a lower portion thereof, so that the horizontal guide rail 129 is caused to move vertically along the vertical guide rails 135a, 135b by the driving force of the motor 136 through the intermediary of the drive and driven pulleys 138a, 138b and the endless belt 137. A balance weight 140 is secured through a fastening member 141 to the vertically extending belt 137 at a location opposite the horizontal guide rail 29 so that the weights of the horizontal guide rail 129, the carrier 126 and its related members and the horizontal transport mechanism including the motor 130, belts 131 and pulleys 132a, 132b are balanced with and offset by the balance weight 40. A cartridge handling means 142 is slidably mounted on the carrier 126 so as to be slidable therealong toward and away from the stockers 123a, 123b for gripping a disk cartridge 121 and transporting it from the stockers 123a, 123b to the recording and reproducing devices 124a, 124b. As clearly shown in Fig. 8, the cartridge handling means 142 has a pair of fingers 142a, 142a which are provided with a pair of inwardly extending engagement projections 142b, 142b adapted to be engageable with the corresponding recesses 122 in the opposite sides of a disk cartridge 121. Now, description will be made of the operation of the above-mentioned disk storage and retrieval device. First, the case is considered in which a desired disk cartridge 121 is taken out of the stocker 123b and inserted into the recording and reproducing device 124a. In this case, the motor 136 is energized to drive the horizontal guide rail 129 through the pulley 138a and the endless belt 137 to move vertically along the vertical guide rails 135a, 135b to a level corresponding to a desired cartridge 121 stored in the stocker 123a. After the horizontal guide rail 129 is thus positioned to the level of the desired cartridge 121, the motor 130 is energized to move the carrier 126 rightward in Fig. 5 along the horizontal guide rail 129 to the righthand stocker 123b through the intermediary of the pulley 132b and the endless belt 131. Then, the cartridge handling means 142 is moved by an unillustrated drive means toward the righthand stocker 123b and the inward projections 142b, 142b of the cartridge handling fingers 142a, 142a are brought into engagement with the recesses 122 in the opposite side edges of the cartridge 121. In this state, the cartridge handling means 142 is moved again by the unillustrated drive means in a direction toward the horizontal guide rail 129 to the initial position whereby the cartridge 121 is drawn into the carrier 126.

Subsequently, the carrier 126 holding the cartridge 121 is moved by the motor 130 in the leftward direction in Fig. 5 along the horizontal guide rail 129, and the horizontal guide rail 129 is vertically moved by means of the motor 136 to a level corresponding to the insertion opening125a in the lefthand recording and reproducing device 124a. In this regard, if a specific surface of the cartridge 121 is to be selected, the cartridge rotation means 127 is operated to drive the cartridge handling means 142 so that the cartridge 121 is turned upside down or through an angle of 180 degrees.

After the carrier 136 has been exactly positioned to the insertion opening 125a in the lefthand recording and reproducing device 124a, the cartridge handling means 142 is again operated to move forward to the recording and reproducing device 124a so that the cartridge 121 is transported from the carrier 126 into the insertion opening 125a in the recording and reproducing device 124a. In this state, the inward projections 142b, 142b of the cartridge handling fingers 142a, 142a are removed or disengaged from the recesses 122 in the cartridge 121, and the cartridge handling means 142 thus disengaged from the cartridge 121 is returned to the initial position. The cartridge 121 transported into the insertion opening 125a is drawn into the interior of the recording and reproducing device 124a by an unillustrated cartridge drawing means provided therein. In this manner, the cartridge 121 can be transported from the stockers 123a, 123b into the recording and reproducing devices 124a, 124b.

Similarly, a cartridge 121 can be transported from the recording and reproducing devices 124a, 124b into the stockers 123a, 123b through the combination of the above-described operations.

Although in the above description, the vertical movement of the horizontal guide rail 129, the horizontal movement of the carrier 126 along the horizontal guide rail 129, and the forward and backward movement of the cartridge handling means 142 are all effected separately from each other, these movements can be performed simultaneously with each other. However, it is preferable to move the cartridge handling means 142 in the forward and backward directions independently of the horizontal guide rail 129 and the carrier 126.

A cartridge sensor is provided for sensing whether or not disk cartridges 121 are stored in place or correctly received in the stockers 123a, 123b. In the illustrated device, the cartridge sensor comprises a light emitter 145 mounted on the top panel of the housing 120 for radiating a light beam such as a laser beam, and a light receiver 146 mounted on the bottom panel of the housing 120 for receiving the light beam radiated from the light emitter 145. If the cartridges 121 are stored in place in the stockers 123a, 123b or in their normal positions wherein the rear ends of the cartridges 121 thus stored are aligned with each other on a vertical line, a light beam radiated by the light emitter 145 is received by the light receiver 146 whereas if any of the cartridge 121 is stored out of place, i.e., displaced or projected from its correct or normal storage position in the stockers, the light beam from the emitter 145 is interrupted by the displaced or projected cartridge 121 and does not reach the receiver 146. The receiver 146 outputs a signal representative of whether or not light beams from the emitter 145 have been received to an appropriate control means (not shown) so that the motors 130, 136 and the cartridge handling means 142 can be controlled by the control means based on the output signal from the receiver 146. Thus, for example, the motors 130, 136 and the cartridge handling means 142 are stopped when the receiver 146 does not receive the light beam from the emitter 145.

Here, it is to be noted that when a cartridge 121 is transported from the stockers 123a, 123b to the carrier 126 or vice versa, the cartridge handling means 142 does not be stopped but can operate normally even if the receiver 146 receives no light beam from the emitter 145.

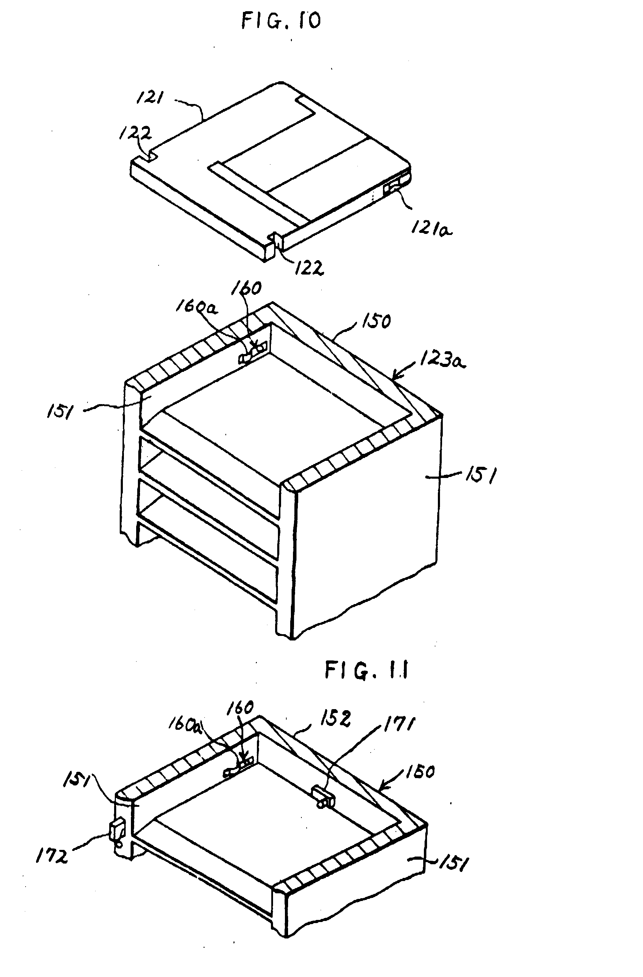

Detent means is provided for preventing inadvertent displacement or jumping out of a disk cartridge 121 from the stocker 123a or 123b. As seen from Fig. 10, such a detent means may comprises a pair of engagement recesses 121a, 121a each in the form of an inwardly curved recess formed on the opposite side edges of a disk cartridge 121, and a plurality of pairs of engagement projections 160, 160 which are provided in each pair on the opposed inner surfaces of the stocker side panels 151, 151 for resilient engagement with the corresponding engagement recesses 121a, 121a in the disk cartridge 121, each of the engagement projections being formed, for example, of a resilient material such as a flat spring and having an inwardly curved projected portion 160a. When a disk cartridge 121 is completely received in the stocker 123a, an appropriate pair of engagement projections 160, 160 on the opposite side panels 151, 151 resiliently fit into the corresponding engagement recesses 121a, 121a in the opposite side edges of the cartridge 121 so as to firmly clamp it against any inadvertent displacement or jumping out thereof from the stocker 123a due to external disturbances such as vibration. In this connection, instead of the above arrangement, a pair of engagement projections may be formed on the opposite side edges of a disk cartridge 121, and a plurality of pairs of engagement recesses 121a, 121a may be formed in the opposite side panels 151, 151 of the stocker 123a. Furthermore, the engagement projections may be formed of wire spring having a curved projected portion, or may comprise a pair of rollers which are mounted through spring members to the opposite side panels 151, 151 of the stocker casing 150 so that the rollers can be resiliently engaged by the biasing forces of the spring members with the corresponding engagement recesses 121a, 121a in a cartridge 121.

Although in this device, the detent means is provided on the stocker casing 150, it may also be provided on the recording and reproducing devices 124a, 124b at their disk receiving positions.

Fig. 11 shows a modified form of cartridge sensor. In this modification, instead of providing the light emitter 145 and the light receiver 146 as in the previous embodiment, a plurality of limit switches are employed. Specifically, a first vertical row of backside limit switches 171 are mounted on the back panel 152 of the stocker casing 150, and another vertical row of frontside limit switches 172 are mounted on the front edge of one of the side panels 151, 151. A specific pair of these limit switches 171, 172 are closed by a cartridge 121 when it is stored in the normal or correct position in the stockers 123a, 123b, whereas they are open when no cartridge 121 is stored in the stockers. On the other hand, a backside limit switch 171 is open and the corresponding frontside limit switch 172 is closed by a cartridge 121 when it is forwardly displaced or projected from the normal or correct storage position in the stockers. Further, it is preferable that a pair of limit switches 171, 172 be provided on appropriate portions of the recording and reproducing devices 124a, 124b.

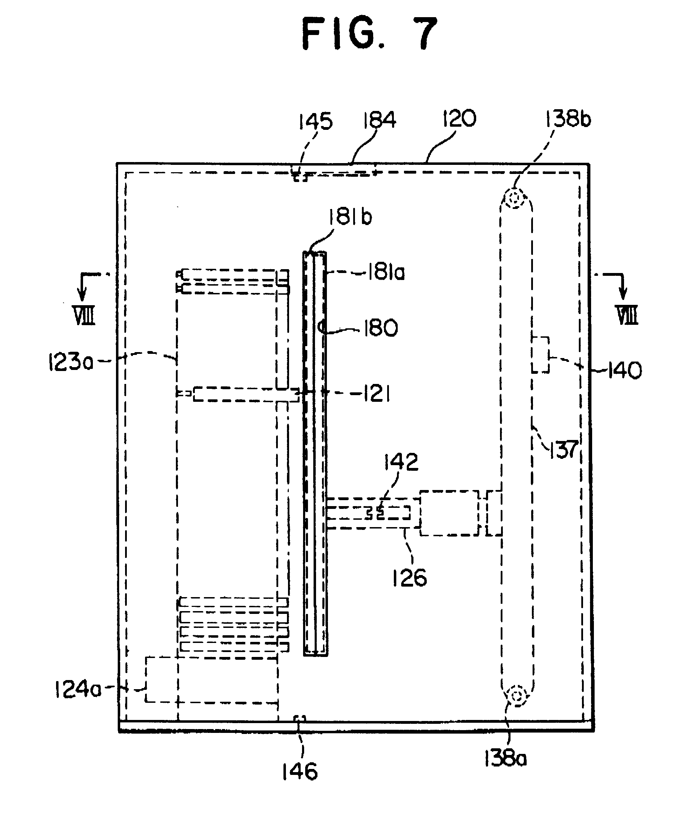

Turning now to Figs. 7 through 9, a pair of vertically extending side openings or windows 180, 180 are respectively formed in the opposite side panels of the housing 120 as clearly seen from Figs. 7 and 8. Each of the side openings or windows 180, 180 is closed by a pair of vertically elongated inner and outer covers 181a, 181b so that foreign matters such as dust or the like can be prevented from entering the interior of the housing 120 through the side openings 180, 180 by means of the side covers 181a, 181b. These side covers 181a, 181b are formed of rubber or other elastic material and each have a vertically extending central slit 182 through which a working tool 183 to be described later can be inserted into the interior of the housing 120 so that an operator can push a displaced or projected cartridge 121 into its normal or correct storage position in the stockers 123a, 123b by using the working tool 183 thus inserted. The inner cover 181a is secured by an adhesive to the inner surface of each side panel of the housing 120 around the side opening 180, whereas the outer cover 181b is secured by an adhesive to the outer surface of each side panel of the housing 120 around the side opening 180.

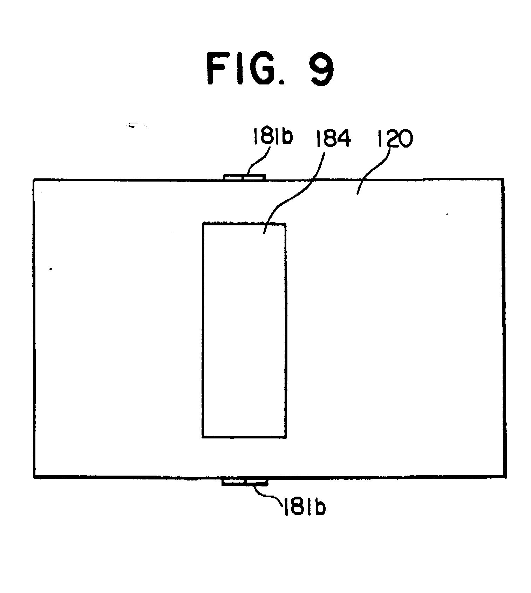

As clearly seen from Fig. 9, an inspection widow 184 is provided in the top panel of the housing 120 so that an operator can inspect the interior of the housing 120 through the inspection window 184 so as to check whether or not the disk cartridges 121 are stored in place in the stockers 123a, 123b. The inspection window 184 is covered with a transparent plate formed of plastics or glass.

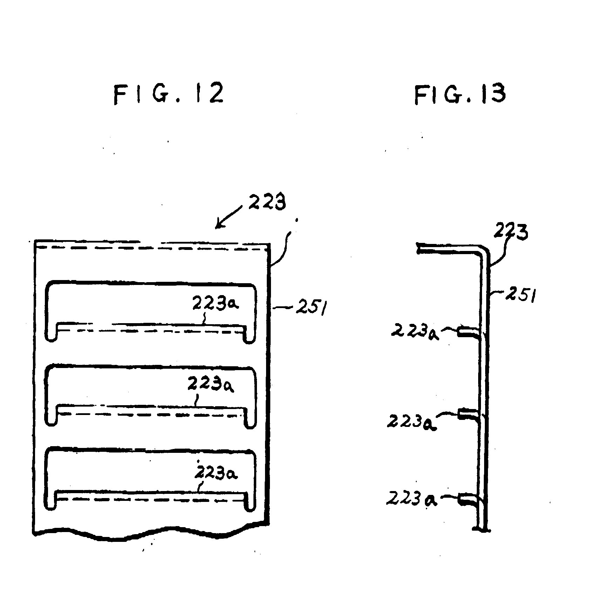

Figs. 12 and 13 shown a further modified form of stocker. In this modification, each side panal 251 of a stocker 223 has a plurality of vertically disposed racks 223a which are integrally formed with the side panel 251 by cutting it in a substantially rectangular shape with its lower edge being left uncut, and then bending the rectangular-shaped cut portion inwardly at right angles at its lower edge. In this connection, however, each rack plate 223a may also be formed by cutting the side panel 251 in a rectangular shape with its upper edge being left uncut, and then bending the thus cut portion inwardly at right angles at its upper edge. To form the racks 223a in this manner serves to reduce the number of component parts, working or assembling steps as well as assembly time and assembly errors of the stocker, thus resulting in substantial improvements in productivity and quality thereof. When the cartridge sensor senses that a disk cartridge 121 is displaced or projected from its correct or normal position in the stocker 123a or 123b, the motors 130 and 136 and the cartridge handling means 142 are stopped and an operator is warned of the occurrence of such an error. In this case, in order to remedy the error, the operator can insert the working tool 183 into the housing 120 through the slits 182 in the window covers 181a, 181b on one side of the housing 120 adjacent the displaced or projected cartridge 121 while inspecting the interior of the housing 120 through the inspection window 184 in the housing top panel. In this state, the operator can engage the tip portion of the working tool 183 with the displaced cartridge 121 and push the cartridge 121 into the normal or correct position in the stocker 123a, 123b by appropriately manipulating the tool 183. Subsequently, when the cartridge sensor senses that the cartridge 121 is returned to the normal or correct position in the stocker 123a or 123b, the operator takes the working tool 183 out of the housing 120 and thus the whole work is over. In this manner, the displaced or projected cartridge 121 can be readily returned to the normal position, resulting in a substantial reduction in working time.

Although in the above device, the housing 120 has two side windows or openings 180, 180 on the opposite sides thereof, a single side opening may be satisfactory if the working tool 183 is large enough to reach all the cartridges 121 stored in the stockers 123a, 123b. Further, instead of providing the covers 181a, 181b for each side window 180, a door may be employed.

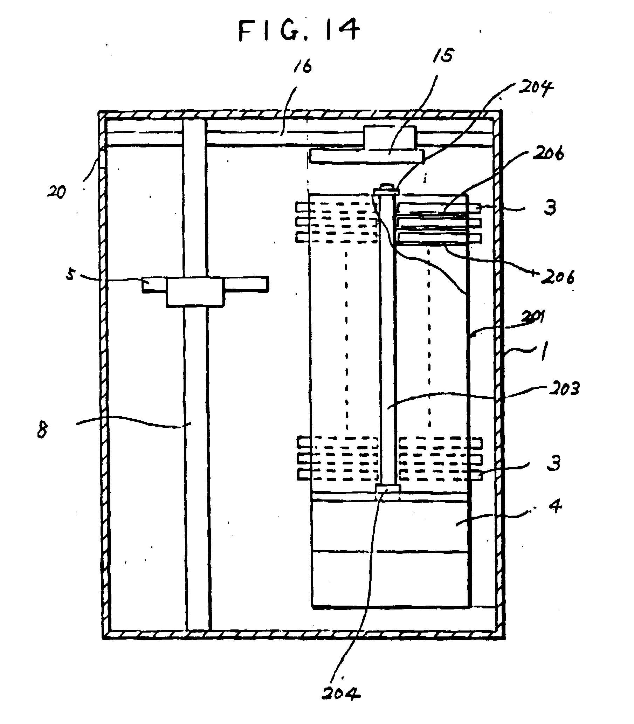

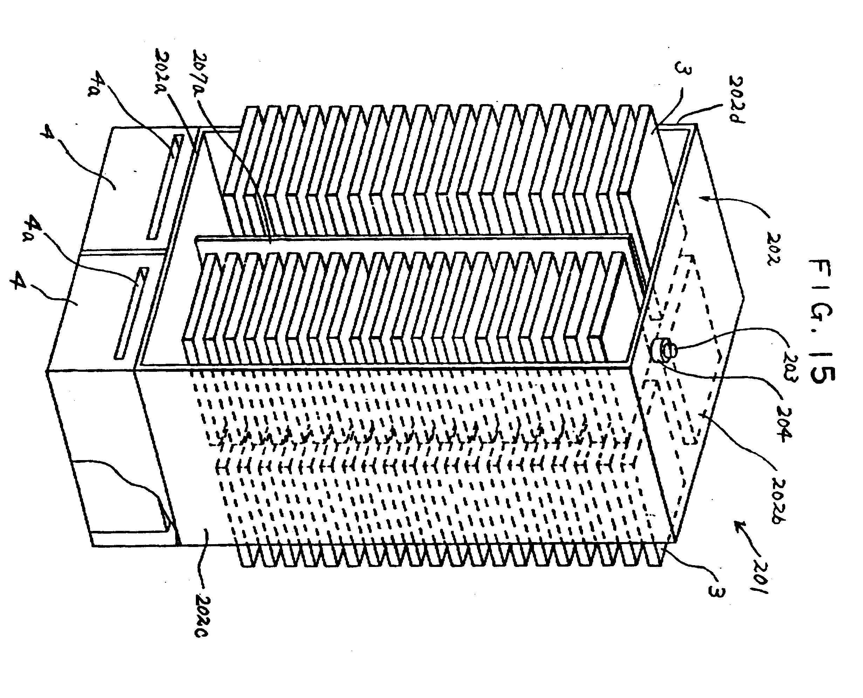

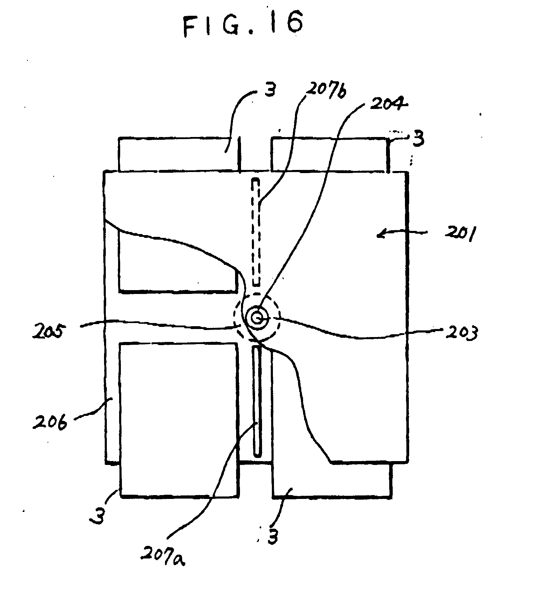

Figs. 14 through 16 shows a preferred embodiment of the present invention which is different from the device of Fig. 4 only in the construction of a cartridge stocker. Members corresponding to those of the first-mentioned embodiment of Fig. 4 are identified by the same reference numerals as employed in Fig. 4.

A cartridge stocker 201 includes a box-shaped casing 202 rotatably mounted on a recording and reproducing devices 4, 4 which are disposed side by side on the bottom wall of the housing 1. The casing 202 has a front and a back surface formed open. A rotary shaft 203 vertically extends through the bottom and top panels 202a, 202b of the casing 202 and are rotatably supported at its upper and lower ends by a pair of upper and lower bearings 204, 204 which are mounted on the top panel 202b and the bottom panel 202a, respectively. The lower end of the rotary shaft 203 extends through the casing bottom panel 202a and is operatively connected through an unillustrated speed-reduction gear with the output shaft of a motor 205, which is disposed below the bottom panel 202a, so that when an operator actuates the motor 205, the rotary shaft 203 is driven to rotate in a predetermined directin through an angle of 180 degrees by the motor 205 at a reduced speed thereby to turn the stocker casing 202 at an angle of 180 degrees around the rotary shaft 203. A plurality of rectangular-shaped shelf plates 206 are attached at their opposite peripheral edges to the opposite side panels 202c, 202d of the stocker casing 202 and at their center to the rotary shaft 203, the shelf plates 206 being arranged vertically at a predetermined vertical interval and each having an area to receive four cartridges 3. The frontside area of each shelf plate 206 is divided into two frontside sections by a vertically extending front partition plate 207a, and the backside area of each shelf plate 206 is similarly divided into two rearside sections by a vertically extending rear partition plate 207b. Thus, each shelf plate 206 has four storage sections for receiving four cartridges 3.

With the above arrangement, disk cartridges 3 are first stored in the frontside sections of the respective shelf plates 206 in the stocker 201, and when there is no space available in the frontside sections of the shelf plates 206, that is the frontside sections are fully occupied by cartridges 3, the operator is informed of this situation through an appropriate means such as a buzzer, an alarm lamp or the like and actuates the motor 205 so that the rotary shaft is driven by the motor 205 to turn the stocker 201 through 180 degrees. Thus, the previously backside sections of the shelf plates 206 are placed in a face-to-face relation with the carrier 5, and cartridges 3 can now be stored there. Accordingly, the capacity of the stocker 201 for storing disk cartridges 3 is greatly increased, i.e., about two times as great as the total capacity of the stockers 123a, 123b in the previous embodiment as illustrated Fig. 5 in which the two stockers 123a, 123b are disposed side by side in the housing 120. In addition, the area and cost required for installing this disk storage and retrieval device are greatly reduced as compared with the case in which two disk storage and retrieval devices as shown in Fig. 5 are employed.

Moreover, it is possible to employ rectangular or square or circular shelf plates each having a larger area able to receive six or more cartridges on the four sides thereof or it is possible to provide side shelf plates on the oppsite sides of the stocker casing in addition to the front and rear shelf plates so as to further increase the cartridge storage capacity. In this case, each of the opposite side panels of the stocker casing have an opening through which cartridges can be transported into or of of the casing interior, and the stocker casing is turned stepwise at an angle of 90 degrees. Also, it is possible to selectively use respective vertical rows of shelf plates according to sorts or contents of information contained in the cartridges.

## Claims

1. A disk storage and retrieval device comprising:
   a housing (1);
   a recording and reproducing means (4) disposed in said housing for recording and reproducing information on a disk cartridge (3); and
   a stocker (201); characterized in that the stocker (201) is rotatably disposed in said housing above said recording and reproducing means for storing a multitude of disk cartridges (3), said stocker having a plurality of horizontal shelf plates (206) which are vertically disposed at equal intervals and fixedly secured to a vertically extending rotary shaft (203) for rotation therewith, each of said shelf plates having a plurality of storage areas for receiving a plurality of disk cartridges (3).

2. A disk storage and retrieval system according to claim 1, further comprising a cartridge transport means (5, 8) for transporting a disk cartridge (3) between said stocker (201) and said recording and reproducing means (4).

3. A disk storage and retrieval device according to either preceding claim, wherein the storage areas of each shelf plate include a frontside storage area disposed at the front side of said stocker, and a backside storage area disposed at the back side of said stocker, said shelf plates being rotatable around said rotary shaft in a stepwise fashion at an angle of 180 degrees.

4. A disk storage and retrieval device according to claim 1 or claim 2, wherein the storage areas of each shelf plate include a frontside storage area disposed at the front side of said stocker, a backside storage area disposed at the back side of said stocker, and a pair of side storage areas disposed at the opposite sides of said stocker, said shelf plates being rotatable around said rotary shaft in a stepwise fashion at an angle of 90 degrees.

## Revendications

1. Dispositif d'entreposage et de récupération de disques comprenant :
   un logement (1) ;
   un moyen enregistreur et reproducteur (4) disposé dans ledit logement pour enregistrer et reproduire l'information sur une cartouche de disque (3); et

un moyen de stockage (201), caractérisé en ce que le moyen de stockage (201) est disposé rotatif dans ledit logement, au-dessus dudit moyen enregistreur et reproducteur, pour entreposer une multitude de cartouches de disque (3), ledit moyen de stockage ayant un certain nombre de plaques formant étagères horizontales (206) qui sont verticalement disposées à des intervalles égaux et fixées solidement à un arbre rotatif (203) s'étendant verticalement, pour une rotation avec lui, chacune desdites plaques formant étagères ayant un certain nombre de zones d'entreposage pour recevoir un certain nombre de cartouches de disque (3).

2. Système d'entreposage et de récupération de disques selon la revendication 1, comprenant de plus un moyen de transport (5, 8) de la cartouche pour le transport d'une cartouche de disque (3) entre ledit moyen de stockage (201) et ledit moyen enregistreur et reproducteur (4).

3. Dispositif d'entreposage et de récupération de disques selon toute revendication précédente, où les zones de stockage de chaque plaque formant étagère comprennent une zone de stockage côté avant disposée du côté avant dudit moyen de stockage et une zone de stockage du côté arrière disposée à l'arrière dudit moyen de stockage, lesdites plaques formant étagères étant rotatives autour dudit arbre rotatif, d'une manière échelonnée, à un angle de 180 degrés.

4. Dispositif d'entreposage et de récupération de disques selon la revendication 1 ou la revendication 2, où lesdites zones de stockage de chaque plaque formant étagère comprennent une zone de stockage côté avant disposée au côté avant dudit moyen de stockage, une zone de stockage côté arrière disposée du côté arrière dudit moyen de stockage et une paire de zones latérales de stockage disposées sur les côtés opposés dudit moyen de stockage, lesdites plaques formant étagères étant rotatives autour dudit arbre rotatif, de manière échelonnée, à un angle de 90 degrés.

**Patentansprüche**

1. Plattenaufbewahrungs- und -entnahmevorrichtung, die folgendes aufweist:

ein Gehäuse (1);

eine Aufzeichnungs- und Wiedergabeeinrichtung (4), die in dem Gehäuse angeordnet ist, um Informationen auf einer Plattenkassette (3) aufzuzeichnen und wiederzugeben;

eine Lagerhaltungseinrichtung (201), dadurch gekennzeichnet, daß die Lagerhaltungseinrichtung (201) drehbar in dem Gehäuse über der Aufzeichnungs- und Wiedergabeeinrichtung angeordnet ist, um eine Vielzahl von Plattenkassetten (3) aufzunehmen, wobei die Lagerhaltungseinrichtung eine Vielzahl von horizontalen Regalplatten (206) aufweist, die in Vertikalrichtung gleichbeabstandet angeordnet und drehfest auf einer vertikal verlaufenden Welle (203) festgelegt sind, wobei jede Regalplatte eine Vielzahl von Aufnahmebereichen hat, um eine Vielzahl von Plattenkassetten (3) aufzunehmen.

2. Plattenaufbewahrungs- und -entnahmevorrichtung nach Anspruch 1, die ferner eine Kassettentransporteinrichtung (5, 8) zum Transport einer Plattenkassette (3) zwischen der Lagerhaltungseinrichtung (201) und der Aufzeichnungs- und Wiedergabeeinrichtung (4) aufweist.

3. Plattenaufbewahrungs- und -entnahmevorrichtung nach einem der vorhergehenden Ansprüche, wobei die Aufnahmebereiche jeder Regalplatte einen an der Vorderseite der Lagerhaltungseinrichtung angeordneten vorderseitigen Aufnahmebereich und einen an der Rückseite der Lagerhaltungseinrichtung angeordneten rückseitigen Aufnahmebereich aufweisen, wobei die Regalplatten stufenweise unter einem Winkel von 180° um die Welle drehbar sind.

4. Plattenaufbewahrungs- und -entnahmevorrichtung nach Anspruch 1 oder 2, wobei die Aufnahmebereiche jeder Regalplatte einen an der Vorderseite der Lagerhaltungseinrichtung angeordneten vorderseitigen Aufnahmebereich, einen an der Rückseite der Lagerhaltungseinrichtung angeordneten rückseitigen Aufnahmebereich und ein Paar von an den entgegengesetzten Seiten der Lagerhaltungseinrichtung angeordneten seitlichen Aufnahmebereichen aufweisen, wobei die Regalplatten stufenweise unter einem Winkel von 90° um die Welle drehbar sind.

# FIG. 1

PRIOR ART

# FIG. 2

PRIOR ART

# FIG.3

PRIOR ART

14a

14

25

EP 0 284 445 B1

FIG. 4

14

FIG. 5

# FIG. 6

# FIG. 7

# FIG. 8

# FIG. 9

FIG. 10

FIG. 11

FIG. 12

FIG. 13

223

223a

251

223a

223a

223

251

223a

223a

223a

FIG. 14

FIG. 15

FIG. 16